# EUROPEAN PATENT APPLICATION

(11) **EP 4 672 550 A1**
(43) Date of publication of application: **31.12.2025**
(21) Application number: 24814183.0
(22) Date of filing: 16.05.2024
(51) Int. Cl.: H02J 7/00, H02H 7/18, H02H 1/06, H02H 3/05

(54) **ENERGY STORAGE APPARATUS AND ENERGY STORAGE APPARATUS OPEN CIRCUIT CONTROL METHOD**

(30) Priority: 01.06.2023 CN 202310642697
(71) Applicant: Alpha Ess Co., Ltd., Nantong, Jiangsu 226300 (CN)
(72) Inventor: ZHANG, Haiyan, Nantong, Jiangsu 226300 (CN); SI, Xiuli, Nantong, Jiangsu 226300 (CN); SUN, Liyan, Nantong, Jiangsu 226300 (CN); MA, Jintao, Nantong, Jiangsu 226300 (CN); SUN, Zhenhua, Nantong, Jiangsu 226300 (CN)
(74) Representative: Winter, Brandl - Partnerschaft mbB
(86) International application number: PCT/CN2024/093536
(87) International publication number: WO 2024/244983

(57) **Abstract**

The present application provides an energy storage device and a circuit breaking control method thereof. The energy storage device includes a main circuit formed by multiple battery modules connected in series in sequence, and the energy storage device comprises a detection module, a circuit breaking protection module connected in series with the main circuit of the energy storage device, and a circuit breaking detection module. The detection module is configured to detect a working status of the energy storage device and turn on the circuit breaking protection module when detecting that the energy storage device fails. The circuit breaking protection module is configured to output circuit breaking drive power after being turned on, and drive a circuit breaker in the main circuit of the energy storage device to break based on the circuit breaking drive power, to disconnect the connection circuit between the energy storage device and an external device. The circuit breaking detection module is configured to perform sampling current detection on the circuit breaking protection module periodically, and output a shunt failure signal when a sampling current does not meet a preset condition.

## Description

The application claims priority from Chinese Patent Application No. 202310642697.1, filed June 1, 2023, all of which are incorporated herein by reference in their entirety.

### TECHNICAL FIELD

The present application relates to the field of energy storage devices, and more particularly to an energy storage device and a circuit breaking control method thereof.

### BACKGROUND

With the popularization of new energy vehicles and the proposal of goals such as "carbon neutrality" and "carbon peak", the energy structure of the entire society is transforming towards electrical energy. Among them, energy storage systems need to be installed in new energy vehicles, and energy storage systems are also required in photovoltaic power generation and wind power generation. When the energy storage system is composed of multiple battery modules connected in series, in the prior art, to improve the stability of the energy storage system, a scheme of controlling each battery separately was adopted, where each battery can be individually connected to or disconnected from a main circuit without affecting other batteries.

However, for products adopting the technical solution mentioned above, in the prior art, when a main power supply of an energy storage device fails, users may still mistakenly operate to manually close a circuit of the energy storage device. After closure, there is no effective disconnection measure for the energy storage device. When the main power supply has failed, charging the battery again will cause battery overcharging, which poses a significant safety risk.

Any prior art mentioned in the DETAILED DESCRIPTION does not constitute an acknowledgment or suggestion that such prior art forms part of common general knowledge in any jurisdiction, or can be reasonably expected to be understood, regarded as relevant and/or combined with other prior art by those skilled in the art.

### SUMMARY

An object of the present application is to provide an energy storage device and a circuit breaking control method thereof to solve the above problems.

To achieve one of the above objects of the application, an embodiment of the present application provides an energy storage device, which comprises a main circuit formed by multiple battery modules connected in series, wherein the energy storage device is configured to connect with an external device to form a circuit, each battery module respectively comprises a battery unit, a control unit and a switch assembly, the control unit is configured to control the switch assembly to connect a single battery module of the multiple battery modules in series into or bypass out of the main circuit of the energy storage device, and when a battery module of the multiple battery modules is bypassed, a circuit path connecting a battery module before the present battery module and a battery module after the present battery module is formed in the present battery module, the energy storage device further comprises a detection module, a circuit breaking protection module connected in series with the main circuit of the energy storage device, and a circuit breaking detection module;
the detection module is configured to detect a working status of the energy storage device and turn on the circuit breaking protection module when detecting that the energy storage device fails;
the circuit breaking protection module is configured to output a circuit breaking drive power after being turned on, and drive a circuit breaker in the main circuit of the energy storage device to break based on the circuit breaking drive power, to disconnect the connection circuit between the energy storage device and the external device;
the circuit breaking detection module is configured to perform sampling current detection on the circuit breaking protection module periodically, and output a shunt failure signal when a sampling current of the circuit breaking protection module does not meet a preset condition.

As a further improvement of the embodiment of the present application, the detection module comprises a normally closed switch module connected in series with the circuit breaking protection module, the normally closed switch module comprises a normally closed switch and a normally closed switch control circuit connected to the normally closed switch, the normally closed switch module is configured to determine that the energy storage device fails and turn on the normally closed switch when losing a control signal of the control unit or receiving a corresponding control signal of the control unit.

As a further improvement of the embodiment of the present application, the circuit breaking protection module further comprises a power module and a shunt trip, an input terminal of the power module is connected to the main circuit of the energy storage device, an output terminal of the power module is connected to the shunt trip, and the normally closed switch module is connected between an input terminal of the power module and a negative pole of the main circuit of the energy storage device.

As a further improvement of the embodiment of the present application, the circuit breaking protection module comprises a power output switch module, the power output switch module comprises a power output switch and a power output switch control circuit connected to the power output switch, the power output switch module is configured to close the power output switch when the power module outputs the circuit breaking drive power, so that the circuit breaking drive power reaches the shunt trip to drive the shunt trip to break the circuit breaker.

As a further improvement of the embodiment of the present application, the circuit breaking protection module further comprises a timing circuit connected in series with the power output switch control circuit, the timing circuit is configured to output a closing signal after being powered by the circuit breaking drive power for timing, the power output switch module is configured to drive the power output switch to close after receiving the closing signal.

As a further improvement of the embodiment of the present application, the circuit breaking detection module comprises a shunt drive power, a shunt sampling resistor connected in series with the shunt trip, a comparator arranged at a side of the shunt sampling resistor, and a shunt detection control unit, the comparator and the shunt detection control unit are configured to output a shunt failure signal to the shunt detection control unit when detecting that a voltage at a side of the shunt sampling resistor exceeds a preset voltage.

As a further improvement of the embodiment of the present application, each battery module further comprises a current detection module, the current detection module is connected in series with the battery unit and the switch assembly of the present battery module which the current detection module belongs to, the current detection module is configured to control the switch assembly to bypass the present battery module out of the main circuit of the energy storage device when detecting that the present battery module is in an overcurrent state.

As a further improvement of the embodiment of the present application, the current detection module comprises a shunt resistor connected in series with the battery unit and the switch assembly, and a current detection amplifier and a high-speed comparator arranged at a side of the shunt resistor, the control unit is configured to drive the switch assembly to bypass the present battery module out of the main circuit of the energy storage device when detecting that a voltage across the shunt resistor exceeds a preset threshold.

The present application also provides a circuit breaking control method for an energy storage device, which comprises the steps of:
performing sampling current detection on a circuit breaking protection module periodically, outputting a shunt failure signal of the circuit breaking protection module when a sampling current does not meet a preset condition; detecting a main power supply of the energy storage device when a sampling current meets a preset condition;
turning on a power module to output circuit breaking drive power when detecting that the main power supply of the energy storage device fails;
the circuit breaking drive power supplying power to a shunt trip, the shunt trip working to break a circuit breaker in a main circuit of the energy storage device.

As a further improvement of the embodiment of the present application, the step of turning on the power module to output circuit breaking drive power when detecting that the main power supply of the energy storage device fails specifically comprises:
turning on a normally closed switch to output circuit breaking drive power through the power module when the circuit breaker is closed and the voltage of the main power supply of the energy storage device is detected to be not within a preset range.

As a further improvement of the embodiment of the present application, the step of turning on the power module to output circuit breaking drive power when detecting that the main power supply of the energy storage device fails specifically comprises:
turning on a normally closed switch to output circuit breaking drive power through the power module when a command to break the circuit breaker needs to be executed and the circuit breaker fails to break.

As a further improvement of the embodiment of the present application, the step of turning on the power module to output circuit breaking drive power when detecting that the main power supply of the energy storage device fails specifically comprises:
turning on a normally closed switch to output circuit breaking drive power through the power module when the control unit resets and there is no control signal at input/output ports of the control unit.

As a further improvement of the embodiment of the present application, the step of outputting the shunt failure signal of the circuit breaking protection module when the sampling current does not meet the preset condition specifically comprises:
when detecting for a first time that the sampling current does not meet the preset condition, detecting a sampling current again after a preset review time interval, and outputting a shunt failure signal of the circuit breaking protection module when the sampling current still does not meet the preset condition after repeating detection for preset times.

As a further improvement of the embodiment of the present application, after outputting the shunt failure signal of the circuit breaking protection module, it further comprises:
uploading failure information by the control unit and stopping charging and discharging of the battery unit.

Compared with the prior art, the beneficial effects of the present application are: The energy storage device provided by the present application can timely disconnect the connection circuit between the energy storage device and the external device when the main power supply of the energy storage device fails through setting up the circuit breaking protection module and detection module.

Moreover, the detection module can still stably and efficiently perform a circuit breaking operation after the main power supply of the energy storage device fails by using a normally closed switch in cooperation with the power module in the circuit breaking protection module.

Furthermore, the energy storage device is also provided with a circuit breaking detection module, which can regularly detect the circuit breaking protection module to prevent its failure.

Additionally, by setting up current detection modules in each battery module respectively, working with the circuit breaking protection module can achieve multi-dimensional improvement of the energy storage device's safety.

The terms "comprise", and variations of this term such as "comprises", "comprised", "comprising", "including", "containing" used in this document, shall not be construed as excluding other features, components, elements, or steps unless the context clearly requires otherwise.

### BRIEF DESCRIPTION OF THE DRAWINGS

FIG.1 shows a circuit block diagram of an energy storage device according to an embodiment of the present application.
FIG.2 shows a circuit block diagram of a detection module and circuit breaking protection module according to an embodiment of the present application.
FIG.3 shows a circuit block diagram of a circuit breaking detection module according to an embodiment of the present application.
FIG.4 shows a circuit block diagram of a current detection module according to an embodiment of the present application.
FIG.5 shows a schematic diagram of steps of a circuit breaking control method for an energy storage device according to an embodiment of the present application.

### DETAILED DESCRIPTION

To make the purpose, technical solutions and advantages of the present application clearer, the technical solutions of the present application will be described clearly and completely in conjunction with specific embodiments and corresponding drawings of the present application. Obviously, the described embodiments are only a part of the embodiments of the present application, not all of them. All other embodiments obtained by those skilled in the art without creative work based on the embodiments of the present application shall fall within the protection scope of the present application.

The embodiments of the present application are described in detail below, where examples of the embodiments are shown in the drawings, in which same or similar reference numerals denote same or similar elements or elements having the same or similar functions throughout. The embodiments described below by reference to the drawings are exemplary and are only used to explain the present application and should not be understood as limitations to the present application.

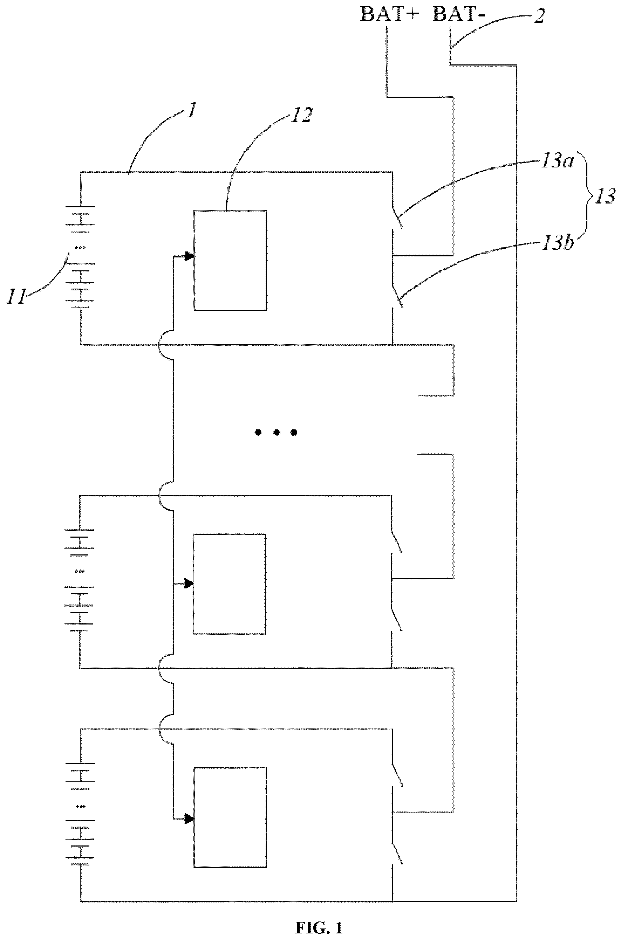

As shown in FIG.1, an embodiment provides an energy storage device, which comprises a main circuit 2 formed by multiple battery modules 1 connected in series. The energy storage device is configured to connect with an external device to form a circuit. Each battery module 1 respectively comprises a battery unit 11, a control unit 12 and a switch assembly 13. The control unit 12 is configured to control the switch assembly 13 to connect a single battery module 1 of the multiple battery modules in series into or bypass out of the main circuit 2 of the energy storage device. When a battery module 1 of the multiple battery modules is bypassed, a circuit path connecting a battery module before the present battery module and a battery module after the present battery module is formed within the present battery module.

In each battery module 1, the battery unit 11 can be a single battery, can comprise multiple single batteries connected in series, can comprise multiple single batteries connected in parallel, or can comprise multiple single batteries connected in series and multiple single batteries connected in parallel, forming a battery pack to compose the battery unit 11 in a basic battery module 1. The battery unit 11 forms a positive electrode and a negative electrode.

Each battery module 1 is provided with a control unit 12 respectively. Each battery module 1 can independently control its battery unit 11. The energy storage device can be seen as a distributed control system. When a problem occurs in a battery module 1, only that battery module 1 needs to be bypassed, and the main circuit 2 of the energy storage device remains a through circuit and can work normally.

In an embodiment, the distributed structure arrangement of battery modules 1 enables the control unit 12 in each battery module 1 to act as a main control unit 12 to send control signals to other control units 12 in other battery modules for communication control. In other embodiments of the present application, a separate main control unit can be set up in the main circuit 2 of the energy storage device to control the control units 12 in other battery modules 1.

The switch assembly 13 can be two switches or a single-pole double-throw switch, etc. In an embodiment, the switch assembly 13 comprises a first switch 13a and a second switch 13b, the battery unit 11 is connected in series with the first switch 13a, and the series connection of the battery unit 11 and the first switch 13a is connected in parallel with the second switch 13b. The control unit 12 determines whether to connect or disconnect the battery unit 11 from the main circuit 2 of the energy storage device based on the condition of the battery unit 11. When the battery unit 11 needs to be connected in series with the main circuit 2, the first switch 13a is closed and the second switch 13b is opened. When the battery unit 11 needs to be bypassed, the first switch 13a is opened and the second switch 13b is closed. The control unit 12 can determine the state of the battery unit 11 based on the voltage and/or state of charge of the battery unit 11, and the specific control strategy can be set according to the application scenario.

Furthermore, the energy storage device further comprises a detection module 3, a circuit breaking protection module 4 connected in series with the main circuit 2 of the energy storage device, and a circuit breaking detection module 6.

The detection module 3 is configured to detect working status of the energy storage device and turn on the circuit breaking protection module 4 when detecting that the energy storage device fails. The circuit breaking protection module 4 is configured to output circuit breaking drive power after being turned on, and drive the circuit breaker 7 in the main circuit 2 of the energy storage device to break based on the circuit breaking drive power, to disconnect the connection circuit between the energy storage device and the external device. The detection module 3 and circuit breaking protection module 4 work together to disconnect the connection circuit between the energy storage device and the external device when a main power supply of the energy storage device actually fails or is determined to fail, thereby avoiding the situation where the circuit breaker 7 is forcibly closed when the main power supply fails, protecting the battery unit or the battery module from overcharging.

The circuit breaking detection module 6 is configured to perform sampling current detection on the circuit breaking protection module 4 periodically, and output a shunt failure signal as a shunt drive signal when a sampling current of the circuit breaking protection module 6 does not meet a preset condition. By setting up an additional circuit breaking detection module 6 for the circuit breaking protection module 4, it can ensure that the circuit breaking protection module 4 will not fail during the use of the energy storage device, further improving the safety of the energy storage device.

In an embodiment, the circuit breaker 7 is an air switch. In other embodiments of the present application, the circuit breaker 7 can also be a vacuum circuit breaker or gas circuit breaker, etc.

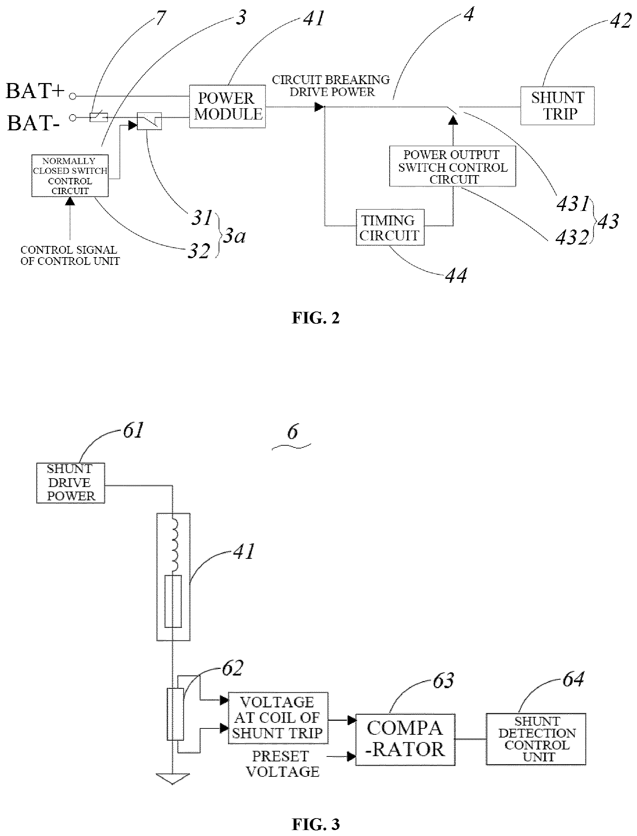

As shown in FIG.2, in an embodiment, the detection module 3 comprises a normally closed switch module 3a connected in series with the circuit breaking protection module 4, the normally closed switch module 3a includes a normally closed switch 31 and a normally closed switch control circuit 32 connected with the normally closed switch 31. The normally closed switch 31, when it is not actuated, its normally closed contact is in a closed state, and when it is actuated, its normally closed contact changes to an open state. The normally closed switch control circuit 32 controls the normally closed switch 31. The normally closed switch module 3a is configured to determine that the energy storage device fails and turn on the normally closed switch 31 when losing a control signal of the control unit 12 or receiving a corresponding control signal of the control unit 12.

Specifically, in an embodiment, the failure of the main power supply of the energy storage device mainly includes the following three situations:
1. When the circuit breaker 7 in the main circuit 2 of the energy storage device is in a closed state, and voltage of the main power supply of the energy storage device is detected to be not within a preset range, at this time the control unit 12 of the energy storage device cannot operate.
2. When a command to break the circuit breaker 7 needs to be executed and the circuit breaker 7 fails to break, it is determined that the drive voltage of the circuit breaker 7 of the main power supply of the energy storage device fails, and the control signal of the control unit 12 needs to be set low.
3. During single board operation, the control unit 12 resets and there is no control signal at input/output ports of the control unit 12.

When any of the above three situations occurs, that is, when there is no control signal from the control unit 12 in the energy storage device circuit or the control signal of the control unit 12 is set low, the detection module 3 set up with the normally closed switch 31 will be turned on, thereby turning on the circuit breaking protection module 4 to enable the circuit breaking drive power to control the circuit breaker 7, thus avoiding the inability to break the circuit breaker 7 due to the failure of the control unit 12. In other embodiments of the present application, when other situations of no signal from the control unit 12 occur, it can also be determined that the circuit breaking protection module 4 needs to be turned on. By using the normally closed switch 31 to constitute the detection module 3 and control the circuit breaking protection module 4, the circuit breaker 7 can still be stably and effectively broken after the control unit 12 of the energy storage device fails, thereby protecting the energy storage device.

Furthermore, the circuit breaking protection module 4 comprises a power module 41 and a shunt trip 42. An input terminal of the power module 41 is connected with the main circuit 2 of the energy storage device, and an output terminal of the power module 41 is connected with the shunt trip 42. The normally closed switch module 3a is connected between the input terminal of the power module 41 and a negative pole of the main circuit 2 of the energy storage device.

Specifically, in an embodiment, the power module 41 is a DC-DC isolation power module. After the normally closed switch 31 is closed, a transformer in the power module 41 (or the power module 41 works as a transformer) reduces the voltage across the main circuit 2 of the energy storage device to a voltage required to drive the circuit breaking protection module 4, and then used as the power supply of the circuit breaking drive power or used as the circuit breaking drive power.

Furthermore, the circuit breaking protection module 4 also comprises a power output switch module 43. The power output switch module 43 comprises a power output switch 431 and a power output switch control circuit 432 connected with the power output switch 431. The power output switch module 43 is configured to close the power output switch 431 when the power module 41 outputs circuit breaking drive power, so that the circuit breaking drive power reaches the shunt trip 42, causing a coil of the shunt trip 42 to generate current and energy, and the shunt trip 42 is driven to trip and break the circuit breaker 7.

Furthermore, the circuit breaking protection module 4 comprises a timing circuit 44 connected in series with the power output switch control circuit 432. The timing circuit 44 is configured to output a closing signal after being powered by the circuit breaking drive power for timing. The power output switch module 43 is configured to drive the power output switch 431 to close after receiving the closing signal. Through the timing circuit 44, a closing signal is output to the power output switch control circuit 432 after a delay period, it ensures that an energy storage capacitor for shunt drive can be fully charged. The specific timing duration of the delay period can be adjusted according to actual product specifications.

Through the above arrangement of the detection module 3 and circuit breaking protection module 4, the connection circuit between the energy storage device and the external device can be effectively disconnected in time after the main power supply of the energy storage device fails, preventing external devices for charging and discharging from continuing to charge the battery unit or the battery module and causing the battery unit or the battery module overcharging. Moreover, after the control unit 12 fails, an embodiment can still stably output circuit breaking drive power to drive the shunt trip 42 to break the circuit breaker 7 by utilizing the normally closed switch 31, thereby further improving the safety and reliability of the energy storage device.

As shown in FIG.3, in an embodiment, the circuit breaking detection module 6 comprises a shunt drive power 61, a shunt sampling resistor 62 connected in series with the shunt trip 41, a comparator 63 arranged at a side of the shunt sampling resistor 62, and a shunt detection control unit 64. The comparator 63 and shunt detection control unit 64 are configured to output a shunt failure signal to the shunt detection control unit 64 when detecting that a voltage at a side of the shunt sampling resistor 62 exceeds a preset voltage.

Since the shunt trip 41 can actually be equivalent to a superposition of inductance and resistance, after the drive power reaches a coil of the shunt trip 41, the current on the coil shows a linear rising trend. The shunt trip 41 will only trip when energy accumulated on the coil of the shunt trip 41 reaches a certain level. Therefore, by controlling the magnitude of a sampling current on the shunt trip, the sampling current can serve a detection purpose without causing the shunt trip 41 to work. For example, in the embodiment, controlling the sampling current to be less than 0.5A is sufficient.

Furthermore, in an embodiment, a shunt drive signal of the shunt detection control unit 64 is set as a PWM square wave. For example, the PWM square wave period is 380us, the duty cycle is 19%, and by default, one detection continuously sends square wave signals for 5 cycles (2ms in total). During the operation of the energy storage device, detection is performed every 30 minutes, a detection scheme is configured such that an interrupt is triggered by falling edge, once an MCU (which can be comprised in the shunt detection control unit 64) detects a falling edge, the PWM wave is stopped sending and the detection circuit around the shunt trip 42 is determined to be valid. During the detection process, when the shunt detection control unit 64 does not receive a falling edge of a detection signal from the comparator 63, the shunt detection control unit 64 outputs the shunt drive signal after 500ms, and if it still does not receive a falling edge after 4 continuous detections, it determines that the detection circuit around the shunt trip 42 has failed. In other embodiments of the present application, the above parameters can be adaptively modified and adjusted according to product specifications and application scenarios.

When the shunt trip 41 is detected to have failed, the shunt detection control unit 64 uploads failure information and stops battery charging and discharging, waiting for professional personnel to inspect and repair the energy storage device.

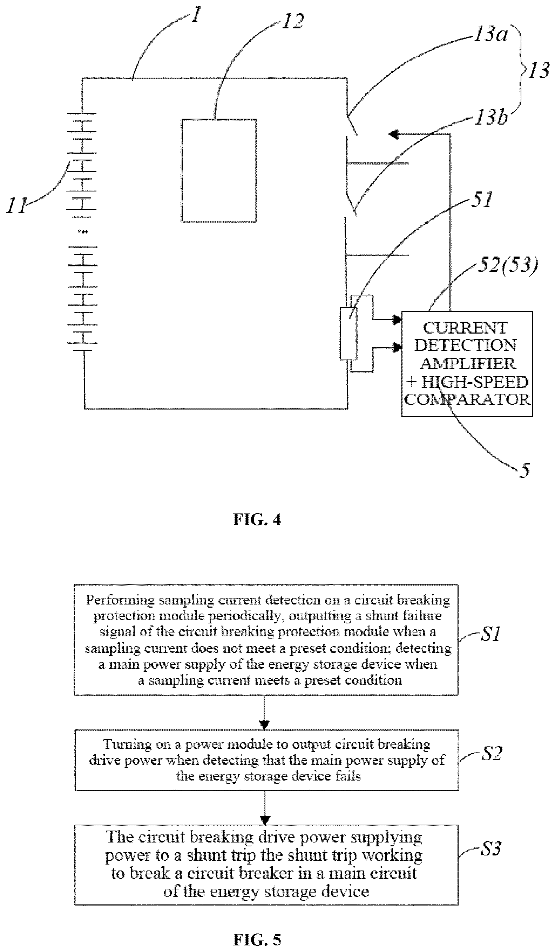

As shown in FIG.4, furthermore, in an embodiment, each battery module 1 comprises a current detection module 5. The current detection module 5 is connected in series with the battery unit and switch assembly 13 of the present battery which the current detection module 5 belongs to. The current detection module 5 is configured to control the switch assembly 13 to bypass the present battery module 1 out of the main circuit 2 of the energy storage device when detecting that the present battery module 1 is in an overcurrent state. In an embodiment, the present battery module 1 can be bypassed out of the main circuit 2 by controlling the first switch 13a to open and controlling the second switch 13b to close.

Specifically, the current detection module 5 comprises a shunt resistor 51 connected in series with the battery unit and switch assembly 13, and a current detection amplifier 52 and a high-speed comparator 53 arranged at a side of the shunt resistor 51. The control unit 12 is configured to drive the switch assembly 13 to bypass the present battery module 1 out of the main circuit 2 of the energy storage device when detecting that the voltage across the shunt resistor 51 exceeds a preset threshold. The current detection amplifier 52 and high-speed comparator 53 can measure the voltage across the shunt resistor 51 with high precision and compare it with a preset voltage threshold. When the voltage across the shunt resistor 51 does not exceed the voltage threshold, an output control signal of the control unit 12 is set high, not affecting the closing and opening of the switch assembly 13; when the voltage across the shunt resistor 51 exceeds the voltage threshold, an output control signal of the control unit 12 is set low, and the switch assembly 13 bypasses the present battery module 1 out of the main circuit 2, causing the present battery module 1 not to output to the main circuit 2.

Furthermore, in an embodiment, the switch assembly 13 comprises MOSFET devices. Combined with the current detection module 5, the response speed of current detection is greatly improved, enabling quickly identification of current ramps and effective differentiation between short-circuit large current and normal-state large current, thereby improving the reliability of overcurrent protection action execution and reducing design costs.

The setup of the current detection module 5 can effectively form overcurrent protection for each battery module 1. In an event of a short circuit in the external device, the battery unit 11 is bypassed and enters a charging and discharging prohibited state, protecting the battery unit 11. The setup of the circuit breaking protection module 4 and current detection module 5 provides protection for both the overall energy storage device and individual battery modules 1, thereby achieving multi-dimensional improvement of the safety of the energy storage device.

As shown in FIG.5, an embodiment also provides a circuit breaking control method for an energy storage device, which can be configured according to any of the above technical solution, which comprises the steps:
S1: Performing sampling current detection on a circuit breaking protection module 4 periodically, outputting a shunt failure signal of the circuit breaking protection module 4 when a sampling current does not meet a preset condition; detecting a main power supply of the energy storage device when a sampling current meets a preset condition.
S2: Turning on a power module 41 to output circuit breaking drive power when detecting that the main power supply of the energy storage device fails.
S3: The circuit breaking drive power supplying power to a shunt trip 42, the shunt trip 42 working to break a circuit breaker 7 in a main circuit of the energy storage device.

In step S1, it specifically comprises:
When detecting for a first time that the sampling current does not meet the preset condition, detecting a sampling current again after a preset review time interval, and outputting a shunt failure signal of the circuit breaking protection module when the sampling current still does not meet the preset condition after repeating detection for preset times.

When the shunt trip 41 is detected to have failed, the control unit uploads failure information and stops battery charging and discharging, waiting for professional personnel to inspect and repair the energy storage device.

In step S2, it specifically includes:
Turning on a normally closed switch 31 to output circuit breaking drive power through the power module 41 when the circuit breaker 7 is closed and the voltage of the main power supply of the energy storage device is detected to be not within a preset range. Or,
turning on a normally closed switch 31 to output circuit breaking drive power through the power module 41 when a command to break the circuit breaker 7 needs to be executed and the circuit breaker 7 fails to break. Or,
turning on a normally closed switch 31 to output circuit breaking drive power through the power module 41 when the control unit 12 resets and there is no control signal at the input/output ports of the control unit 12.

In step S3, it specifically includes:
The circuit breaking drive power supplying power to a timing circuit 44, after the timing circuit 44 delays for a period of time, outputting a closing signal to a power output switch control circuit 432. The power output switch control circuit 432 drives a power output switch 431 to close. the shunt trip 42 receiving power to break the circuit breaker 7.

In summary, the energy storage device provided by the embodiment can timely disconnect the connection circuit between the energy storage device and the external device when the main power supply of the energy storage device fails through setting up the circuit breaking protection module and detection module. Moreover, the detection module can still stably and efficiently perform circuit breaking operations after the main power supply of the energy storage device fails by using a normally closed switch in cooperation with the power module in the circuit breaking protection module. Furthermore, the energy storage device is provided with a circuit breaking detection module, which can regularly detect the circuit breaking protection module to prevent its failure. Additionally, by setting up current detection modules in each battery module respectively, the safety of the energy storage device can be improved in multiple dimensions in cooperation with the circuit breaking protection module.

It should be understood that although the DETAILED DESCRIPTION describes according to embodiments, not every embodiment contains only one independent technical solution. This way of description in the DETAILED DESCRIPTION is merely for clarity. Those skilled in the art should take the DETAILED DESCRIPTION as a whole, and the technical solutions in various embodiments can also be appropriately combined to form other embodiments that can be understood by those skilled in the art.

The series of detailed descriptions listed above are merely specific descriptions of feasible embodiments of the present application, and are not used to limit the protection scope of the present application. Any equivalent implementation or modification made without departing from the technical spirit of the present application should be included within the protection scope of the present application.

## Claims

1. An energy storage device, **characterized by** comprising a main circuit formed by multiple battery modules connected in series, wherein the energy storage device is configured to connect with an external device to form a circuit, each battery module respectively comprises a battery unit, a control unit and a switch assembly, the control unit is configured to control the switch assembly to connect a single battery module of the multiple battery modules in series into or bypass out of the main circuit of the energy storage device, and when a battery module of the multiple battery modules is bypassed, a circuit path connecting a battery module before the present battery module and a battery module after the present battery module is formed in the present battery module;
the energy storage device further comprises a detection module, a circuit breaking detection module connected in series with the main circuit of the energy storage device, and a circuit breaking protection module;
the circuit breaking detection module is configured to perform sampling current detection on the circuit breaking protection module periodically, and output a shunt failure signal when a sampling current of the circuit breaking protection module does not meet a preset condition;
the detection module is configured to detect a working status of the energy storage device, when the circuit breaking detection module detects that a sampling current meets the preset condition, the detection module is configured to turn on the circuit breaking protection module when detecting that the energy storage device fails;
the circuit breaking protection module is configured to output a circuit breaking drive power after being turned on, and drive a circuit breaker in the main circuit of the energy storage device to break based on the circuit breaking drive power, to disconnect the connection circuit between the energy storage device and the external device.

2. The energy storage device according to claim 1, **characterized in that** the detection module comprises a normally closed switch module connected in series with the circuit breaking protection module, the normally closed switch module comprises a normally closed switch and a normally closed switch control circuit connected to the normally closed switch, the normally closed switch module is configured to determine that the energy storage device fails and turn on the normally closed switch when losing a control signal of the control unit or receiving a corresponding control signal of the control unit.

3. The energy storage device according to claim 2, **characterized in that** the circuit breaking protection module further comprises a power module and a shunt trip, an input terminal of the power module is connected to the main circuit of the energy storage device, an output terminal of the power module is connected to the shunt trip, and the normally closed switch module is connected between an input terminal of the power module and a negative pole of the main circuit of the energy storage device.

4. The energy storage device according to claim 3, **characterized in that** the circuit breaking detection module comprises a shunt drive power, a shunt sampling resistor connected in series with the shunt trip, a comparator arranged at a side of the shunt sampling resistor, and a shunt detection control unit, the comparator and the shunt detection control unit are configured to output a shunt failure signal to the shunt detection control unit when detecting that a voltage at a side of the shunt sampling resistor exceeds a preset voltage.

5. The energy storage device according to claim 4, **characterized in that** the shunt detection control unit is configured to detect the sampling current periodically and output a PWM square wave shunt drive signal.

6. The energy storage device according to claim 4, **characterized in that** the shunt detection control unit is configured to, when detecting for a first time that the sampling current does not meet the preset condition, detect a sampling current again after a preset review time interval, and output a shunt failure signal of the circuit breaking protection module when the sampling current still does not meet the preset condition after repeating detection for preset times.

7. The energy storage device according to claim 3, **characterized in that** the circuit breaking protection module comprises a power output switch module, the power output switch module comprises a power output switch and a power output switch control circuit connected to the power output switch, the power output switch module is configured to close the power output switch when the power module outputs the circuit breaking drive power, so that the circuit breaking drive power reaches the shunt trip to drive the shunt trip to break the circuit breaker.

8. The energy storage device according to claim 4, **characterized in that** the circuit breaking protection module further comprises a timing circuit connected in series with the power output switch control circuit, the timing circuit is configured to output a closing signal after being powered by the circuit breaking drive power for timing, the power output switch module is configured to drive the power output switch to close after receiving the closing signal.

9. The energy storage device according to claim 1, **characterized in that** each battery module further comprises a current detection module, the current detection module is connected in series with the battery unit and the switch assembly of the present battery module which the current detection module belongs to, the current detection module is configured to control the switch assembly to bypass the present battery module out of the main circuit of the energy storage device when detecting that the present battery module is in an overcurrent state.

10. The energy storage device according to claim 9, **characterized in that** the current detection module comprises a shunt resistor connected in series with the battery unit and the switch assembly, and a current detection amplifier and a high-speed comparator arranged at a side of the shunt resistor, the control unit is configured to drive the switch assembly to bypass the present battery module out of the main circuit of the energy storage device when detecting that a voltage across the shunt resistor exceeds a preset threshold.

11. A circuit breaking control method for an energy storage device according to any one of claims 1-10, **characterized by** comprising the steps of:
performing sampling current detection on a circuit breaking protection module periodically, outputting a shunt failure signal of the circuit breaking protection module when a sampling current does not meet a preset condition; detecting a main power supply of the energy storage device when a sampling current meets a preset condition;
turning on a power module to output circuit breaking drive power when detecting that the main power supply of the energy storage device fails;
the circuit breaking drive power supplying power to a shunt trip, the shunt trip working to break a circuit breaker in a main circuit of the energy storage device.

12. The circuit breaking control method for the energy storage device according to claim 11, **characterized in that** the step of turning on the power module to output circuit breaking drive power when detecting that the main power supply of the energy storage device fails specifically comprises:
turning on a normally closed switch to output circuit breaking drive power through the power module when the circuit breaker is closed and the voltage of the main power supply of the energy storage device is detected to be not within a preset range.

13. The circuit breaking control method for the energy storage device according to claim 11, **characterized in that** the step of turning on the power module to output circuit breaking drive power when detecting that the main power supply of the energy storage device fails specifically comprises:
turning on a normally closed switch to output circuit breaking drive power through the power module when a command to break the circuit breaker needs to be executed and the circuit breaker fails to break.

14. The circuit breaking control method for the energy storage device according to claim 11, **characterized in that** the step of turning on the power module to output circuit breaking drive power when detecting that the main power supply of the energy storage device fails specifically comprises:
turning on a normally closed switch to output circuit breaking drive power through the power module when the control unit resets and there is no control signal at input/output ports of the control unit.

15. The circuit breaking control method for the energy storage device according to claim 11, **characterized in that** the step of outputting the shunt failure signal of the circuit breaking protection module when the sampling current does not meet the preset condition specifically comprises:
when detecting for a first time that the sampling current does not meet the preset condition, detecting a sampling current again after a preset review time interval, and outputting a shunt failure signal of the circuit breaking protection module when the sampling current still does not meet the preset condition after repeating detection for preset times.
